# EUROPEAN PATENT APPLICATION

(11) **EP 2 525 547 A1**
(43) Date of publication of application: **21.11.2012**
(21) Application number: 12167979.9
(22) Date of filing: 15.05.2012
(51) Int. Cl.: H04L 29/06

(54) **SYSTEMS, METHODS, AND APPARATUS FOR NETWORK INTRUSION DETECTION BASED ON MONITORING NETWORK TRAFFIC**

(30) Priority: 16.05.2011 US 201113108445
(71) Applicant: General Electric Company, Schenectady, NY 12345 (US)
(72) Inventor: Boot, John, Sandy Springs, GA Georgia 30328 (US); Thomson, Matthew, Marietta, GA Georgia 30066 (US); Ree, Bradley Richard, Cumming, GA Georgia 30028 (US)
(74) Representative: Cleary, Fidelma

(57) **Abstract**

Systems (200), methods (500), and apparatus for network intrusion detection are provided. A device may include at least one memory (252) and at least one processor (250). The at least one memory (252) may be configured to store computer-executable instructions that facilitate traffic inspection of communications received by the device (205). The at least one processor (250) may be configured to access the at least one memory (252) and execute the computer-executable instructions to (i) identify (520) one or more network traffic parameters associated with a network traffic profile for the device (205); (ii) evaluate ((525), based at least in part upon the one or more network traffic parameters, at least one communication received by the device (205); and (iii) determine (530), based at least in part upon the evaluation, whether the at least one communication satisfies the traffic profile.

## Description

### FIELD OF THE INVENTION

Embodiments of the invention relate generally to network security, and more specifically to systems, methods, and apparatus for detecting network intrusions based upon an analysis of network traffic.

### BACKGROUND OF THE INVENTION

Networks are utilized in a wide variety of applications to route data between various network devices. For example, various types of networks are utilized in utility applications, medical applications, and industrial control applications. Utilizing the example of a utility application, mesh networks are typically utilized to route data between utility meters. Additionally, networks associated with an Advanced Metering Infrastructure ("AMI") are typically utilized to route meter data to central control devices and central servers. Other types of networks are also utilized to route data between power generation devices, power plants, and operational controllers.

Security is typically a primary concern within any network. Accordingly, improved systems, methods, and apparatus for providing network security and facilitating network intrusion detection are desirable.

### BRIEF DESCRIPTION OF THE INVENTION

Some or all of the above needs and/or problems may be addressed by certain embodiments of the invention. Embodiments of the invention may include systems, methods, and apparatus for network intrusion detection based at least in part upon monitoring network traffic.

According to a first aspect, the invention resides in a method for network intrusion detection based at least in part upon monitoring network traffic. A communications interface associated with at least one communication received by a device may be identified. One or more network traffic parameters associated with a network traffic profile for the communications interface may be determined. Based at least in part upon the one or more network traffic parameters, the at least one communication may be evaluated. Based at least in part upon the evaluation, a determination may be made as to whether the at least one communication satisfies the traffic profile.

The invention further resides in a computer program adapted to perform the above method when executed by a computer and in the computer program embodied on a computer-readable medium.

According to another aspect, the invention resides in an apparatus or device, such as a utility meter, configured to facilitate intrusion detection within a network based at least in part upon monitoring network traffic. The device may include at least one memory and at least one processor. The at least one memory is configured to store the computer program described above are the at least one processor is configured to access the at least one memory and execute the computer program.

Additional systems, methods, apparatus, features, and aspects are realized through the techniques of various embodiments of the invention. Other embodiments and aspects of the invention are described in detail herein and are considered a part of the claimed invention. Other embodiments, features, and aspects can be understood with reference to the description and the drawings.

### BRIEF DESCRIPTION OF THE DRAWINGS

Embodiments of the present invention will now be described, by way of example only, with reference to the accompanying drawings in which:
FIG. 1 is a block diagram of one example system that facilitates network intrusion detection based at least in part upon monitoring network traffic, according to an illustrative embodiment of the invention.
FIG. 2 is a block diagram of another example system that facilitates network intrusion detection based at least in part upon monitoring network traffic, according to an illustrative embodiment of the invention.
FIG. 3 is a block diagram of an example utility application in which various embodiments of the invention may be utilized.
FIG. 4 is a flow diagram of an example method for evaluating network traffic to facilitate network intrusion detection, according to an illustrative embodiment of the invention.
FIG. 5 is a flow diagram of another example method for evaluating network traffic to facilitate network intrusion detection, according to an illustrative embodiment of the invention.

### DETAILED DESCRIPTION OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are systems, methods, and apparatus for evaluating network traffic to facilitate network intrusion detection. In one example embodiment of the invention, one or more devices may be in communication via any number of suitable networks. For example, one or more utility devices (e.g., utility meters, AMI devices, distribution automation devices, utility field force devices, substation automation devices, etc.) may be in communication via any number of suitable networks (e.g., mesh networks, AMI networks, local area networks, wide area networks, cellular networks, etc.). As another example, one or more medical devices may be in communication via any number of suitable networks, such as a proprietary medical network. Each device may be configured to identify one or more received communications and evaluate the communications based upon a traffic profile for the device. For example, in certain embodiments, a traffic profile for a device may be identified or determined based upon historical communications data and/or one or more established standards and/or protocols for network communication associated with the device. Using an example of a utility meter, a traffic profile for the utility meter (e.g., an expected number of communications, expected bandwidth of communications, etc.) may be determined based at least in part upon established communication standards and/or historical communications data for the utility meter. Based at least in part upon the analysis or evaluation of the communications, a determination may be made as to whether the traffic profile and/or traffic profile parameters are satisfied. If it is determined that the profile is not satisfied, then a potential network intrusion may be identified. In this regard, network security may be provided based upon the evaluation of communications utilizing a traffic profile.

In certain embodiments, a device may be configured to store and execute a special purpose application that facilitates an analysis of network traffic. The application may facilitate the identification of a type associated with the device (e.g., a device model number, etc.) and the identification of one or more communications interfaces and/or communications links utilized by the device or associated with the device type. Based at least in part upon the identifying information, the application may generate or identify a traffic profile for the device. A wide variety of information may be included in a traffic profile, such as traffic flow parameters associated with an expected number of communications to be received in a predetermined time period, an expected amount of data to be included in communications, an expected amount of data to be included in a predetermined time period, expected time durations for communications sessions, expected time durations between communications session, an expected number of errors or threshold number of errors to be identified during a predetermined time period, and/or times at which communications are received (e.g., time of day, day of week, day of month, etc.). As desired, a respective traffic profile may be generated for various communications links and/or network connections. Following the establishment of a traffic profile, the application may identify one or more communications received by the device. The application may then utilize the traffic profile and/or the traffic flow parameters to evaluate the communications. Based at least in part upon the analysis or evaluation, the application may determine whether the communications satisfy the traffic profile and/or the various traffic parameters.

As one example, the special purpose application may be installed on a utility meter. The utility meter may receive and transmit data in a standard format, such as a proprietary vendor format or an industry standard format. Accordingly, communications received by the utility meter may have a relatively predefined structure and/or frequency. For example, a certain number of communications may typically be received from other meters and/or from control devices during a specified time period. The application may utilize the established standard and, as desired, historical communications data, to generate a traffic profile for the utility meter. The application may then utilize the traffic profile to analyze and/or evaluate future communications to determine whether the traffic profile is satisfied.

In various embodiments, a device may be configured to generate an alert, such as a security alert, based upon the identification of one or more communications that do not satisfy a traffic profile. In certain embodiments, a generated alert may be communicated to a managing server or managing controller (e.g., a central controller, etc.) for processing and/or analysis. For example, a utility meter may communicate a generated alert to a managing control (e.g., an AMI controller, etc), and the managing controller may process the generated alert in order to identify and/or act upon any potential security threat. In other embodiments, a generated alert may be processed by the device, and the device may take one or more control actions based upon the generated alert. For example, in the event that a managing controller generates an alert based upon the analysis of communications, the managing control may identify a potential security threat and take one or more control actions based upon the identification. A wide variety of control actions may be taken as desired in various embodiments of the invention. Suitable control actions include, but are not limited to, initiating a deep packet inspection of the content of communications, identifying an originating device for a communication, controlling operation of one or more devices, blocking communications received from the originating device, blocking communications based on device addresses, redirecting communications or network traffic via switching and/or routing, dispatching an operator to investigate the originating device, etc.

Various embodiments of the invention may include one or more special purpose computers, systems, and/or particular machines that facilitate network intrusion detection based upon monitoring network traffic. A special purpose computer or particular machine may include a wide variety of different software modules as desired in various embodiments. As explained in greater detail below, in certain embodiments, these various software components may be utilized to detect potential network intrusions and/or security risks within a network.

As desired in various embodiments of the invention, a device that detects network intrusions may be a stand-alone device connected to one or more networks. In other embodiments, network intrusion detection functionality may be incorporated into one or more existing devices.

Certain embodiments of the invention described herein may have the technical effect of detecting network intrusions, such as network intrusions within a utility network or a medical network, based upon an evaluation of communications utilizing a network traffic profile, such as a traffic flow profile. Additionally, embodiments of the invention may have the technical effect of taking one or more control actions to correct or otherwise respond to a detected network intrusion or another identified security threat.

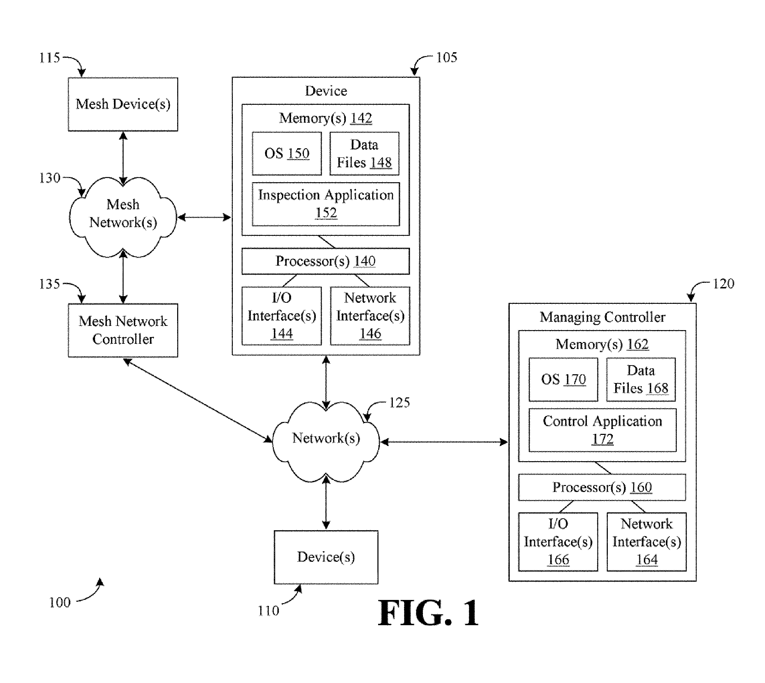

FIG. 1 is a block diagram of one example system 100 for detecting network intrusion based at least in part upon monitoring network traffic, according to an illustrative embodiment of the invention. The system 100 illustrated in FIG. 1 may include any number of devices 105, 110, 115 and at least one managing controller 120. Any number of networks 125, 130 may be utilized to facilitate communication between various components of the system 100. For example, as shown in FIG. 1, a device 105 may be in communication with any number of other devices 110 and/or the managing controller 120 via one or more suitable networks 125, such as a utility network, a medical network, an industrial control network, a local area network, a wide area network, a cellular network, etc. As another example, the device 105 may be a suitable mesh network device in communication with any number of other mesh devices 115 and/or a mesh network controller 135 via any number of suitable mesh networks 130. As desired, the mesh network controller 135 may communicate with the managing controller 120 via any number of suitable networks 125.

Indeed, a wide variety of network configurations and arrangements may be utilized as desired in various embodiments of the invention. For example, one or more network configurations may be associated with a utility provider. As one example, any number of local and/or wide area networks may facilitate communications between the control devices. Additionally, any number of mesh networks 130 may include mesh nodes and/or devices associated with an AMI system. For example, utility meters and/or other sensors may be part of an AMI system that monitors utility usage, such as gas, water, and/or electricity usage. As desired, components of the AMI system may communicate with mesh network controllers 135, and the mesh network controllers 135 may communicate information to monitoring utilities, such as one or more utilities associated with the managing controller 120. A mesh network 130 may include any number of mesh devices. A mesh device may be any suitable device configured to participate as a node within the mesh network 130, such as a utility meter, a mesh network controller 135, mesh repeaters, and/or other mesh nodes. Each mesh node may act as an independent router to allow for continuous connections and reconfiguration around broken or blocked paths by "hopping" from node to node until the destination is reached.

As another example, one or more network configurations may be associated with a medical system and/or a medical provider. For example, a proprietary medical network, the Internet, or another network may be utilized to facilitate communication between various medical devices, such as patient monitoring devices, physician devices, benefit provider devices, pharmacy devices, and/or various managing controllers and/or service providers. As yet another example, one or more network configurations may be associated with an industrial control system. For example, various networks may facilitate communications between managing controllers, distributed control systems, and/or distributed sensors and/or field automation devices.

As stated above, any number of devices 105, 110, 115 may be in communication with one another and/or the managing controller 120. An example device 105 will now be described in greater detail. The device 105 may be any suitable device that may be connected to a network, such as a suitable utility meter, AMI device, industrial control device, field automation device, medical device, or other device. As such, the device 105 may optionally be configured to measure or monitor various parameters (e.g., electrical usage, voltage, current, temperature, etc.). As desired, measurements data and/or other data may be communicated by the device 105 to other devices and/or components of the system 100. Additionally, in accordance with an aspect of the invention, the device 105 may evaluate communications generated by and/or received by the device 105 to determine whether the communications satisfy a traffic profile.

The device 105 may include any number of suitable computer processing components that facilitate the general operation of the device 105 and/or the evaluation of communications for network intrusion detection purposes. For example, the device 105 may include one or more controllers or processing devices configured to monitor and evaluate communications. Examples of suitable processing devices that may be incorporated into a device 105 include, but are not limited to, application-specific circuits, microcontrollers, minicomputers, other computing devices, and the like. As such, the device 105 may include any number of processors 140 that facilitate the execution of computer-readable instructions to control the operations of the device 105 and the detection of potential network intrusions. By executing computer-readable instructions, the device 105 may include or form a special purpose computer that facilitates network intrusion detection based upon an evaluation of communications utilizing a network traffic profile.

In addition to one or more processor(s) 140, the device 105 may include one or more memory devices 142, one or more input/output ("I/O") interfaces 144, and/or one or more network interface devices 146. The one or more memory devices 142 or memories may be any suitable memory devices, for example, caches, read-only memory devices, random access memory devices, magnetic storage devices, etc. The one or more memory devices 142 may store data, executable instructions, and/or various program modules utilized by the device 105, for example, data files 148, an operating system ("OS") 150, and/or an inspection application 152 or inspection module. The data files 148 may include, for example, information associated with the operation of the device 105, information associated with one or more established communications standards associated with the device 105, a network traffic profile, one or more traffic parameters, information associated with generated alert messages, and/or data associated with measurements and/or readings taken by the device 105.

In certain embodiments of the invention, the device 105 may include any number of software applications or modules that are executed to facilitate the operations of the device 105. The software applications may include computer-readable instructions that are executable by the one or more processors 140. The execution of the computer-readable instructions may form a special purpose computer that facilitates the operations of the device 105 as well as network intrusion detection. As an example of a software application, the device 105 may optionally include an OS 150 that controls the general operation of the device 105 and that facilitates the execution of additional software applications.

Additionally, the device 105 may include an inspection application 152 or inspection module. The inspection application 152 may be a suitable software module configured to facilitate the identification and processing of communications or messages received by the device 105. In operation, the inspection application 152 may build, generate, or otherwise determine a traffic profile for the device 105. For example, the inspection application 152 may identify a type associated with the device 105 and/or information associated with one or more networks, communications interfaces, and/or communications links that facilitate device communications. The inspection application 152 may utilize at least a portion of this information to generate a traffic profile for the device 105. For example, the inspection application 152 may identify one or more established communications standards and/or protocols for the device type and/or the networks, and the inspection application 152 may utilize the identified standards and/or protocols to generate a traffic profile. The traffic profile may include a wide variety of information associated with expected network traffic for the device, such as one or more expected traffic parameters for the device. Examples of expected traffic parameters include, but are not limited to, a parameter associated with a number of communications received during a predetermined time period (e.g., an hour, a day, etc.), a parameter associated with an amount of data included in a communication, a parameter associated with an amount of data received during a predetermined time period, one or more parameters associated with time durations for established communications sessions, one or more parameters associated with a time duration between communications sessions, parameters associated with a threshold number of errors that may normally be identified during a predetermined time period, and/or parameters associated with a time at which communications are received. Additionally, as desired, the inspection application 152 may utilize historical traffic information (e.g., information associated with communications received during one or more historical time periods, etc.) to determine a traffic profile. As an alternative to generating a traffic profile, the inspection application 152 may identify a traffic profile that has been previously stored on the device 105, or the inspection application 152 may obtain a traffic profile from an external source. For example, the inspection application 152 may obtain a traffic profile from a removable storage device. As another example, the inspection application 152 may obtain a traffic profile from an external source (e.g., the managing controller 120) via any number of suitable network communications.

Once a traffic profile and/or one or more traffic parameters have been generated and/or obtained, the inspection application 152 may utilize the traffic profile and/or parameters to analyze or evaluate communications received by the device 105. For example, the inspection application 152 may track and evaluate received communications based upon the traffic profile. In this regard, the inspection application 152 may determine whether the traffic flow to the device 105 satisfies one or more expected traffic flow parameters for the device. Based at least in part upon the evaluation of communications utilizing one or more traffic parameters, the inspection application 152 may determine whether the communications satisfy the traffic profile. If one or more communications are determined to satisfy the traffic profile, then the inspection application 152 may approve the communication. If, however, one or more communications are determined to not satisfy the traffic profile, then the inspection application 152 may generate an alert associated with the one or more communications. In certain embodiments, the inspection application 152 may direct communication of an alert message to the managing controller 120 for further processing. In this regard, the managing controller 120 may determine whether a network intrusion has occurred, and the managing controller 120 may direct one or more control actions in response to the determination. For example, the managing controller 120 may communicate instructions to the device 105 for processing future communications. In other embodiments, the inspection application 152 may direct one or more control actions in response to a generated alert. A wide variety of control actions may be taken as desired in various embodiments of the invention. A few example control actions are discussed in greater detail below with reference to the managing controller 120.

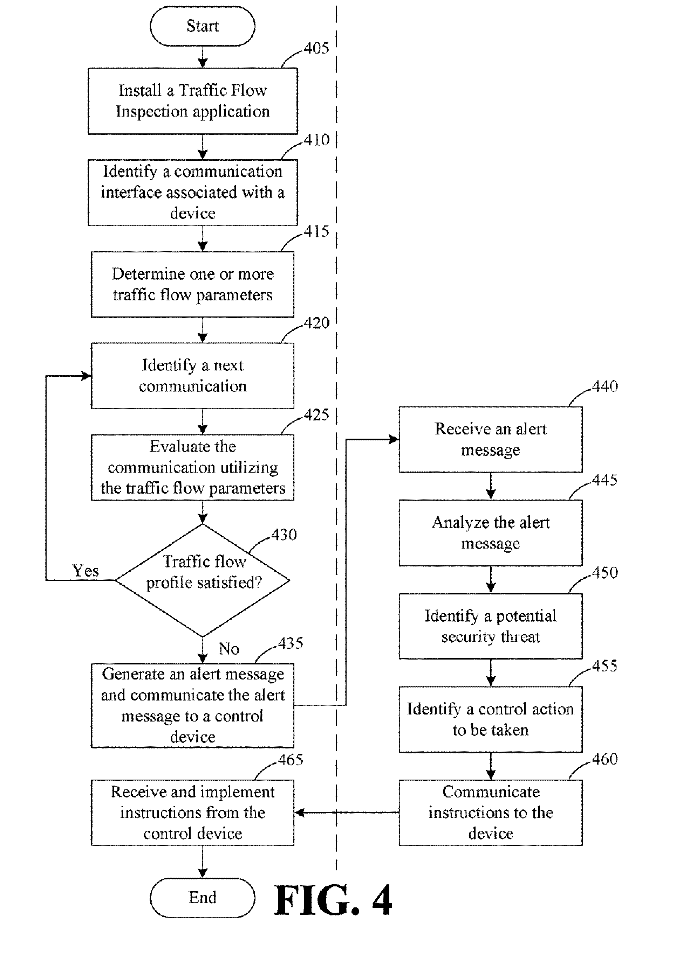

Indeed, the inspection application 152 may perform a wide variety of different operations to evaluate communications and determine whether a traffic profile is satisfied. The operations described above are provided by way of example only. Another example of the operations that may be performed by the inspection application 152 is described in greater detail below with reference to FIG. 4.

With continued reference to the device 105, the one or more I/O interfaces 144 may facilitate communication between the device 105 and one or more input/output devices, for example, one or more user interface devices, such as a display, keypad, mouse, pointing device, control panel, touch screen display, microphone, speaker, etc., that facilitate user interaction with the device 105. In this regard, user commands may be received by the device 105. Additionally, the one or more network interface devices 146 may facilitate connection of the device 105 to any number of suitable networks, such as a mesh network 130 or other type of network 125. In this regard, the device 105 may receive data from and/or communicate data to other components of the system 100. In certain embodiments, the network interface devices 144 may include a mesh radio configured to communicate with the mesh network 130. The radio may transmit, receive, and forward messages to other nodes of the mesh network 130. Additionally, as desired in certain embodiments, the network interface devices 146 may include any suitable communications interfaces, network cards, and/or other devices configured to communicate with other devices 110 and/or the managing controller 120 via any number of wide area networks or other networks. For example, the network interface devices 146 may include Ethernet cards, network interface cards, cellular transceivers, broadband over power line adaptors, and/or other devices.

In certain embodiments, the device 105 may be configured to communicate via a mesh network 130. As desired, a mesh network controller 135 may be configured to facilitate communication between the device 105 and the managing controller 120. The mesh network controller 135 may be a suitable processor-driven device configured to function as an interface between the mesh network 130 and the networks 125 that facilitate communication with the managing controller 120. As such, the mesh network controller 135 may include components similar to those described for the device 105 and/or the managing controller 120. For example, the mesh network controller 135 may include one or more processors, one or more memories, and/or one or more network interface devices. In operation, the mesh network controller 135 may receive messages from mesh devices via the mesh network 130, and the mesh network controller 135 may selectively communicate the received messages to the managing controller 120 via one or more wide area networks 125. Communications may be routed from the managing controller 120 to the mesh devices in a similar manner.

As desired, the mesh network controller 135 may evaluate or analyze communications in a similar manner as that described for the device 105. For example, the mesh network controller 135 may include a suitable inspection module or inspection application that generates or obtains a traffic profile and utilizes the traffic profile to determine whether received communications satisfy traffic parameters. As a result, the mesh network controller 135 may selectively generate alert messages in the event that a traffic profile is not satisfied. Additionally, in certain embodiments, the mesh network controller 135 may take one or more control actions based upon the generation of an alert and/or based upon the receipt of an alert message from a mesh device.

With continued reference to FIG. 1, the managing controller 120 may form or be a part of a suitable system associated with the device 105. For example, in the event that the device 105 is a utility meter or a field automation device, the managing controller 120 may be associated with a power substation or other utility system. The managing controller 120 may include any number of suitable computer processing components that facilitate the receipt and processing of alert messages, the direction of control actions based upon intrusion detection, and/or the communication of data and/or instructions to any number of devices. Examples of suitable processing devices that may be incorporated into a managing controller 120 include, but are not limited to, application-specific circuits, microcontrollers, minicomputers, personal computers, servers, other computing devices, and the like. As such, a managing controller 120 may include any number of processors 160 that facilitate the execution of computer-readable instructions to control the operations of the managing controller 120. By executing computer-readable instructions, the managing controller 120 may include or form a special purpose computer that facilitates the receipt and processing of alert messages in order to identify potential network intrusions.

In addition to one or more processor(s) 160, the managing controller 120 may include one or more memory devices 162, one or more network interface devices 164, and/or one or more input/output ("I/O") interfaces 166. The one or more memory devices 162 or memories may be any suitable memory devices, for example, caches, read-only memory devices, random access memory devices, magnetic storage devices, etc. The one or more memory devices 162 may store data, executable instructions, and/or various program modules utilized by the managing controller 120, for example, data files 168, an operating system ("OS") 170, and/or a control application 172 or control module. The data files 168 may include stored data associated with the operation of the managing controller 120, information associated with received alert messages, information associated with identified intrusions and/or intrusion device nodes, information associated with control actions taken by the managing controller 120, information associated with communications that failed to satisfy one or more traffic profiles, and/or information associated with the analysis or evaluation of communications.

The OS 170 may be a suitable software module or application that executes computer-executable instructions to control the general operation of the managing controller 120 and to facilitate the execution of additional software applications. The control application 172 may be a suitable software module or application that executes computer-executable instructions to facilitate administration of and/or communication with any number of distributed devices and/or network devices. In this regard, the control application 172 may be configured to receive and process data output by devices, such as device 105, and/or other components of the system 100. For example, in a utility application, the control application 172 may be configured to receive and process measurements data, status messages, and/or alert messages output by one or more utility meters and/or field automation devices. The control application 172 may additionally be configured to communicate messages, instructions, and/or updates to any number of other devices and/or components of the system 100.

According to an aspect of the invention, the control application 172 may be configured to receive and process one or more alert messages associated with identified invalid or unacceptable content. Based upon an analysis of the received alert messages, the control application 172 may identify potential security threats and/or network intrusions. As desired, the control application 172 may additionally identify a location or approximate location for a device that poses a potential security threat. Once a potential security threat has been identified, the control application 172 may direct or trigger the execution of any number of control actions associated with the potential security threat. In this regard, the control application 172 may enhance security within one or more networks and respond to intrusion detections. A wide variety of control actions may be directed as desired in various embodiments of the invention. For example, a technician or group of technicians may be dispatched to evaluate a potential security threat. As another example, a deep packet inspection of one or more suspicious communications may be directed or initiated. As yet another example, communications to and/or from a device that poses a potential security threat may be limited or disallowed. As desired, certain communications and/or network traffic may be blocked based on device identifiers. Alternatively, network traffic may be redirected via switching and/or routing operations. As yet another example, certain devices may be turned on or off at the direction of the control application 172. One example of the operations that may be performed by the control application 172 is described in greater detail below with reference to FIG. 4.

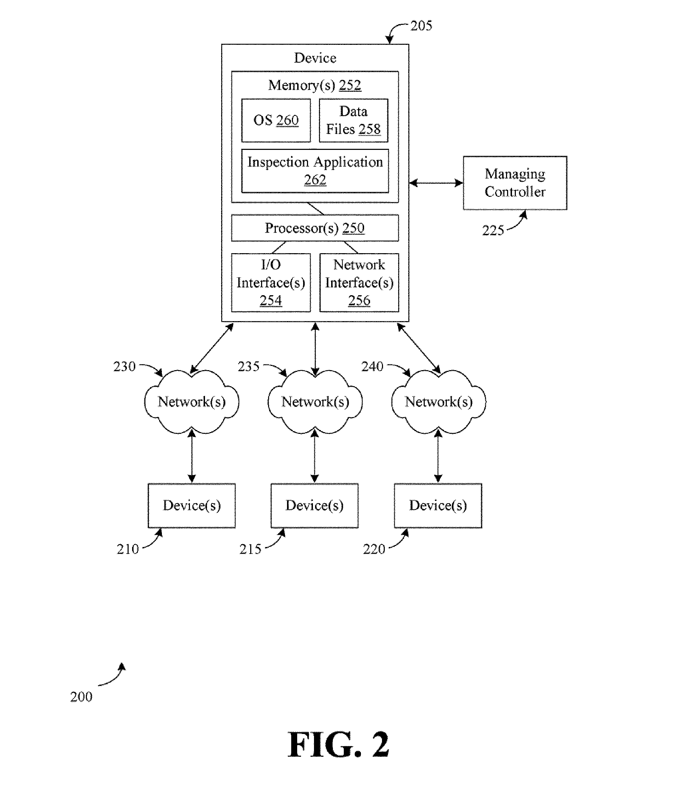

Additionally, in certain embodiments, the managing controller 120 may be configured to build and/or generate one or more traffic profiles in a similar manner as that described for the device. Indeed, a respective traffic profile may be generated for each communications link associated with the managing controller 120. The managing controller 120 may then utilize the traffic profiles to evaluate communications received by the managing controller 120 in order to determine whether the communications satisfy any number of traffic parameters. In certain embodiments, a plurality of networks and/or network interfaces may be associated with the managing controller 120. For example, a managing controller 120 associated with a utility provider may be configured to communicate via multiple types of networks utilizing a wide variety of communication protocols, such as an AMI protocol and/or a Foundation Fieldbus protocol. As desired, the managing controller 120 may generate traffic profiles for any number of different interfaces and selectively utilize one or more traffic profiles to evaluate communications. For example, the managing controller 120 may function in a similar manner as the device 205 described in greater detail below with reference to FIG. 2.

With continued reference to the managing controller 120, the one or more network interface devices 164 may facilitate connection of the managing controller 120 to any number of networks, such as one or more wide area networks 125. In this regard, the managing controller 120 may receive data from and/or communicate data to other components of the system 100, such as the mesh network controller 135 and/or other components configured to communicate via the networks 125. Additionally, the one or more I/O interfaces 166 may facilitate communication between the managing controller 120 and one or more input/output devices, for example, one or more user interface devices, such as a display, keypad, control panel, touch screen display, remote control, microphone, etc., that facilitate user interaction with the managing controller 120.

The one or more networks 125 may include any number of suitable networks that facilitate communication between the various components of the system 100, such as the managing controller 120, certain devices 105, 110, and/or the mesh network controller 135. For example, the one or more networks 125 may include any number of suitable wide area networks and/or local area networks, such as the Internet, a cellular network (e.g., 2G, 3G, 4G, etc), a digital subscriber line ("DSL") network, a fiber optic network, a wireless network (e.g., an 802.11 network, an 802.16 network, etc.) a Wi-Fi enabled network, a Bluetooth-enabled network, a broadband over power line network, a satellite-based network, a proprietary medical network, etc.

FIG. 2 is a block diagram of another example system 200 for detecting network intrusion based upon monitoring network traffic, according to an illustrative embodiment of the invention. The system 200 illustrated in FIG. 2 may include any number of devices 205, 210, 215, 220. In certain embodiments, the system 200 may also include at least one managing controller 225. Any number of networks 230, 235, 240 and/or network connections may be utilized to facilitate communication between various components of the system 200. For example, as shown in FIG. 2, a device 205 may be in communication with any number of other devices 210, 215, 220 via a plurality of different types of networks and/or networks.

A wide variety of network configurations and arrangements may be utilized as desired in various embodiments of the invention. For example, one or more network configurations may be associated with a utility provider. As one example, any number of local and/or wide area networks may facilitate communications between a device 205 and any number of distributed devices. For example, a control device associated with a utility network may be in communication with various types of distributed devices, such as utility meters, field automation devices, substation control devices, etc., via different types of networks and/or communications interfaces. As another example, a medical controller may be in communication with various distributed devices, such as healthcare claims payers, patient devices, and/or monitoring devices, via various types of medical networks.

With continued reference to FIG. 2, the device 205 will now be described in greater detail. The device 205 may be any suitable device that may be connected to one or more networks, such as an AMI control device, a substation control device, a distributed automation device, a utility field force automation device, a medical control device, and/or an industrial control device. As such, the device 205 may be configured to receive and/or transmit communications to any number of distributed devices 210, 215, 220 via various types of networks 230, 235, 240. Additionally, in certain embodiments, the device 205 may be configured to communicate with a higher level controller, illustrated as a managing controller 225. For example, an AMI control device may communicate with a substation control device or a central utility controller.

The device 205 may include any number of suitable computer processing components that facilitate the general operation of the device 205 and/or the evaluation of communications for network intrusion detection purposes. For example, the device 205 may include one or more controllers or processing devices configured to monitor and evaluate communications utilizing any number of traffic parameters. Examples of suitable processing devices that may be incorporated into a device 205 include, but are not limited to, application-specific circuits, microcontrollers, minicomputers, other computing devices, and the like. As such, the device 205 may include any number of processors 250 that facilitate the execution of computer-readable instructions to control the operations of the device 205 and the detection of potential network intrusions. By executing computer-readable instructions, the device 205 may include or form a special purpose computer that facilitates network intrusion detection.

In addition to one or more processor(s) 250, the device 205 may include one or more memory devices 252, one or more input/output ("I/O") interfaces 254, and/or one or more network interface devices 256. The one or more memory devices 252 or memories may be any suitable memory devices, for example, caches, read-only memory devices, random access memory devices, magnetic storage devices, etc. The one or more memory devices 252 may store data, executable instructions, and/or various program modules utilized by the device 205, for example, data files 258, an operating system ("OS") 260, and/or an inspection application 262 or inspection module. The data files 258 may include, for example, information associated with the operation of the device 205, information associated with one or more networks and/or distributed devices, information associated with one or more established communications standards associated with the device 205, one or more traffic profiles and/or traffic parameters associated with various interfaces and/or communications links, information associated with generated alert messages, and/or data associated with control actions taken by the device 205.

In certain embodiments of the invention, the device 205 may include any number of software applications or modules that are executed to facilitate the operations of the device 205. The software applications may include computer-readable instructions that are executable by the one or more processors 250. The execution of the computer-readable instructions may form a special purpose computer that facilitates the operations of the device 205 as well as network intrusion detection. As an example of a software application, the device 205 may optionally include an OS 250 that controls the general operation of the device 205 and that facilitates the execution of additional software applications.

Additionally, the device 205 may include an inspection application 262 or inspection module. The inspection application 262 may be a suitable software module configured to facilitate the identification and processing of communications or messages received by the device 205. In operation, the inspection application 262 may build or generate one or more traffic profiles for the device 205. For example, the inspection application 262 may identify one or more networks and/or communications interfaces that facilitate device communications. The inspection application 262 may then determine one or more traffic profiles for each of the identified networks and/or communications interfaces. For example, the inspection application 262 may identify one or more established communications standards and/or protocols for a network, and the inspection application 262 may utilize the identified standards and/or protocols to generate a traffic profile for the network. As desired, the inspection application 262 may additionally utilize historical communications information to generate a traffic profile. A traffic profile may include a wide variety of information associated with expected network traffic for the device 205, such as one or more expected traffic parameters for the device 205. Examples of expected traffic parameters include, but are not limited to, a parameter associated with a number of communications received during a predetermined time period (e.g., an hour, a day, etc.), a parameter associated with an amount of data included in a communication, a parameter associated with an amount of data received during a predetermined time period, one or more parameters associated with time durations for established communications sessions, one or more parameters associated with a time duration between communications sessions, parameters associated with a threshold number of errors that may normally be identified during a predetermined time period, and/or parameters associated with a time at which communications are received (e.g., a time of day, a day of week, a month, etc.). As an alternative to generating a traffic profile, the inspection application 262 may identify a traffic profile that has been previously stored on the device 205, or the inspection application 262 may obtain a traffic profile from an external source. For example, the inspection application 262 may obtain a traffic profile from a removable storage device. As another example, the inspection application 262 may obtain a traffic profile from an external source (e.g., the managing controller 225) via any number of suitable network communications.

Once one or more traffic profiles have been generated and/or obtained, the inspection application 262 may utilize the one or more traffic profiles to analyze or evaluate communications received by the device 205. For example, the inspection application 262 may identify a network, communications interface, or communications link associated with one or more identified communications. The inspection application 262 may then access or determine a traffic profile associated with the identified network or communications interface, and the inspection application 262 may identify one or more traffic parameters for evaluating communications. The inspection application 262 may then evaluate the one or more communications utilizing the traffic parameters. Based at least in part upon the evaluation, the inspection application 262 may determine whether the one or more communications satisfy the traffic parameters and/or the traffic profile. If the one or more communications are determined to satisfy the traffic parameters, then the inspection application 262 may approve the one or more communications. If, however, one or more communications are determined to not satisfy the traffic parameters (e.g., an expected bandwidth parameter is exceeded, a number of expected communications is exceeded, etc.), then the inspection application 262 may generate an alert associated with the one or more communications. In certain embodiments, the inspection application 262 may direct communication of an alert message to the managing controller 225 for further processing. In this regard, the managing controller 225 may determine whether a network intrusion has occurred, and the managing controller 225 may direct one or more control actions in response to the determination. For example, the managing controller 225 may communicate instructions to the device 205 for processing future communications. In other embodiments, the inspection application 262 may direct one or more control actions in response to a generated alert. As explained in greater detail above with reference to the system 100 of FIG. 1, a wide variety of control actions may be taken as desired in various embodiments of the invention.

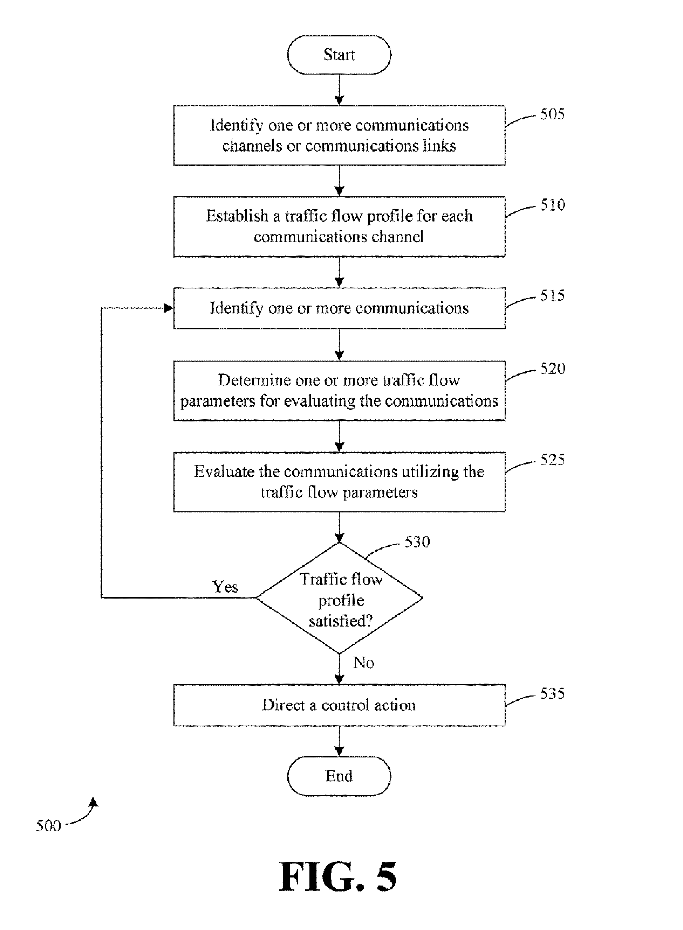

Indeed, the inspection application 262 may perform a wide variety of different operations to evaluate communications and determine whether communications satisfy one or more traffic profiles. The operations described above are provided by way of example only. Another example of the operations that may be performed by the inspection application 262 is described in greater detail below with reference to FIG. 5.

With continued reference to the device 205, the one or more I/O interfaces 254 may facilitate communication between the device 205 and one or more input/output devices, for example, one or more user interface devices, such as a display, keypad, mouse, pointing device, control panel, touch screen display, microphone, speaker, etc., that facilitate user interaction with the device 205. In this regard, user commands may be received by the device 205. Additionally, the one or more network interface devices 256 may facilitate connection of the device 205 to any number of suitable networks, such the networks 230, 235, 240 illustrated in FIG. 2. In this regard, the device 205 may receive data from and/or communicate data to other components of the system 200. As desired in certain embodiments, the network interface devices 256 may include any suitable communications interfaces, network cards, and/or other devices configured to communicate with other devices 210, 215, 220 and/or the managing controller 225 via any number of wide area networks or other networks. For example, the network interface devices 256 may include Ethernet cards, network interface cards, cellular transceivers, broadband over power line adaptors, and/or other devices.

With continued reference to FIG. 2, the managing controller 225 may be similar to the managing controller 120 described above with reference to FIG. 1. Additionally, each of the other devices 210, 215, 220 may include components similar to the device 205 and/or to the device 105 described above with reference to FIG. 1. The various networks 230, 235, 240 may include any suitable networks that facilitate communications between devices, such as local area networks, wide area networks, Bluetooth-enabled networks, Wi-Fi enabled networks, cellular networks, radio frequency networks, private networks, public-switched networks, etc. As desired, a device may be configured to communicate via any number of networks. For example, a utility control device may be configured to communicate via a plurality of utility networks (e.g., AMI networks, Fieldbus networks, etc.). In the event that a device communicates via a plurality of networks, different traffic profiles may be determined for each network.

As desired, embodiments of the invention may include systems with more or less than the components illustrated in FIGS. 1 and 2. Additionally, certain components of the systems 100, 200 may be combined in various embodiments of the invention. The systems 100, 200 of FIGS. 1 and 2 are provided by way of example only.

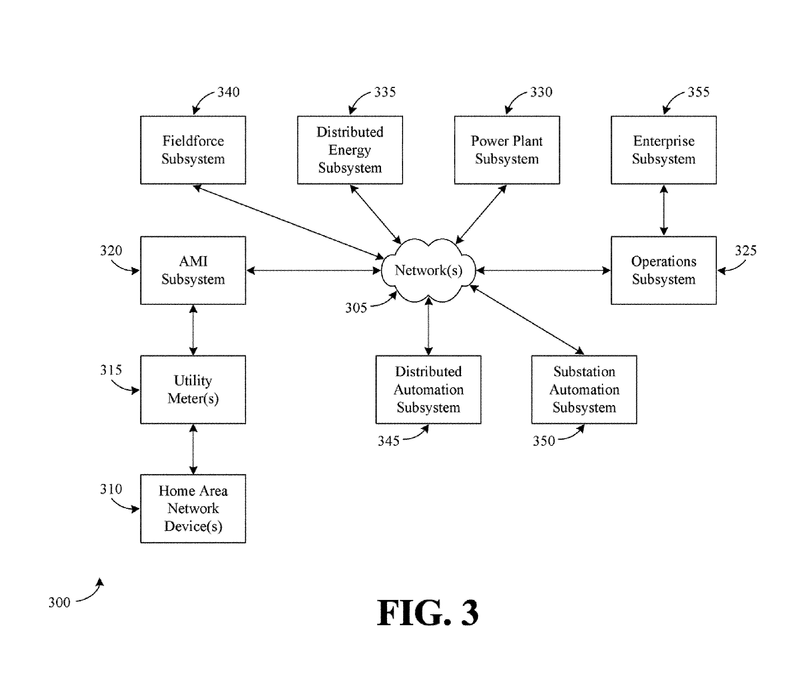

As desired, embodiments of the invention may be utilized in a wide variety of applications, such as utility applications, medical applications, and/or industrial control applications. In certain embodiments, the types of messages and/or the number and/or sizes of messages that are communicated may be relatively limited due to the specialized nature of the application. For example, a relatively limited number of different types of applications may be communicated between various components of a utility network. FIG. 3 is a block diagram of one example utility application 300 in which various embodiments of the invention may be utilized.

With reference to FIG. 3, various components of a utility application 300 may be in communication with one another via any number of suitable networks. For example, home area network ("HAN") devices may be in communication with respective utility meters 315 associated with various customers of a utility provider. The utility meters 315 may in turn be in communication with a suitable AMI subsystem 320 that facilitates communication with any number of other components of the utility application 300, such as an operations subsystem 325. As desired, the utility meters 315 may be in communication with one another via one or more mesh networks. Additionally, certain utility meters 315 (or a mesh network controller) may be in communication with the AMI subsystem via any number of AMI networks.

With continued reference to FIG. 3, the operations subsystem 325 may also be in communication with any number of other utility components, such as a power plant subsystem 330, any number of distributed energy subsystems 335 (e.g., photovoltaic cells subsystems, wind turbine subsystems, etc.), any number of Fieldforce subsystems 340, any number of distributed automation subsystems 345 and/or any number of substation automation subsystems 350. Additionally, the operations subsystem 325 may be in communication with an enterprise subsystem 355. Although the operations subsystem 325 is described as being in communication with a plurality of other devices, any components of the application 300 may be in communication with one another via the networks 305.

According to an aspect of the invention, one or more traffic profiles may be established or determined for each type of network interface and/or network described for the utility application 300. For example, a utility meter 315 may include a traffic profile for communications received from other utility meters, a traffic profile for communications received from a HAN device, and/or a traffic profile for communications received from an AMI subsystem 320. As another example, the operations subsystem 325 may include respective traffic profiles associated with the various components of the application 300 in communication with the operations subsystem 325. As desired, each device or subsystem may evaluate or analyze communications utilizing the traffic profiles. In this regard, a device may determine whether one or more traffic parameters are satisfied by communications, and the device may identify potential security risks and/or network instructions based at least in part upon the determinations.

The utility application 300 illustrated in FIG. 3 is provided by way of example only. As desired, embodiments of the invention may be utilized with other types of applications, such as medical applications and/or industrial control applications.

FIG. 4 is a flow diagram of an example method 400 for analyzing communications and traffic flow to facilitate network intrusion detection, according to an illustrative embodiment of the invention. The method 400 may be utilized in association with one or more network-based systems, such as the system 100 illustrated in FIG. 1. In certain embodiments, the operations of the method 400 may be performed by at least one device and a managing controller, such as the device 105 and managing controller 120 illustrated in FIG. 1.

The method 400 may begin at block 405. At block 405, a traffic flow inspection application, such as the inspection application 152 illustrated in FIG. 1, may be installed on the device 105. In certain embodiments, a technician or other individual may install the inspection application 152 on the device 105. For example, a technician may install the inspection application 152 from a portable memory device. In other embodiments, the inspection application 152 may be communicated to the device from another device or system, such as the managing controller 120. For example, the inspection application 152 may be communicated to the device 105 and installed as part of a software update. Once installed, the inspection application 152 may be executed by the device 105 in order to facilitate the analysis of communications for intrusion detection purposes.

At block 410, a communications interface associated with the device 105 may be identified. For example, the inspection application 152 may identify a network interface or communications link associated with the device or established for the device. As another example, a device type may be identified by the inspection application 152 by utilizing, for example, identifying information for the device 105 (e.g., a device identifier, a model number, etc.), and the device type may be utilized to identify a network interface or communications interface associated with the device. In this regard, the inspection application 152 may be a relatively generic application that may be utilized by a wide variety of different types of devices and/or in conjunction with a wide variety of different types of communications interfaces.

At block 415, a traffic profile and/or one or more traffic parameters may be determined or generated for the device. For example, a traffic profile may be generated for the device 105 and/or the communications interface. In certain embodiments, one or more established communications standards and/or communications protocols associated with device communications and/or the communications interface may be identified or determined. Utilizing the example of a utility meter, various utility meter data format standards (e.g., International Electrotechnical Commission ("IEC") 61850, IEC 61968, a ZigBee profile standard (e.g., Smart Energy Profile 1.0, Smart Energy Profile 2.0, etc.), a North America Energy Standards Board ("NAESB") Energy Services Provider Interface standard, etc.) may be determined. The standards and/or protocols may then be utilized to determine or generate a traffic profile and/or traffic parameters for the device 105. For example, a standard may be utilized to determine an expected communications flow for the device, such as numbers, sizes, and/or types of communications that will be received during a predetermined time period. As desired, a wide variety of other parameters and/or information may be utilized to generate a traffic profile. For example, information associated with the network (e.g., privacy settings, security settings, ownership information, etc.), a service provider (e.g., a utility provider, a medical provider, etc.), and/or information associated with other devices in communication with the device 105 may be utilized to generate a relatively accurate traffic profile. As another example, historical information associated with communications received by the device and/or associated devices may be evaluated and utilized to generate and/or modify a traffic profile. In this regard, a traffic profile may be tailored to various device settings and/or implementations.

The traffic profile may include a wide variety of information associated with expected network traffic for the device 105, such as one or more expected traffic parameters for the device. Examples of expected traffic parameters include, but are not limited to, a parameter associated with a number of communications received during a predetermined time period (e.g., an hour, a day, etc.), a parameter associated with an amount of data included in a communication, a parameter associated with an amount of data received during a predetermined time period, one or more parameters associated with time durations for established communications session, one or more parameters associated with a time duration between communications sessions, parameters associated with a threshold number of errors that may normally be identified during a predetermined time period, and/or parameters associated with a time at which communications are received.

At block 420, a next communication associated with the device 105 may be identified. For example, a communication received by the device 105 from another device via a communications network may be identified. At block 425, the communication may be evaluated or analyzed utilizing the traffic profile and/or one or more traffic parameters. A wide variety of suitable methods and/or techniques may be utilized to evaluate the communication. For example, information associated with the communication (e.g., a bandwidth, communication timing, a communication count associated with the communication, etc.) may be compared to one or more traffic parameters, such as bandwidth, number of communications, and/or timing parameters. As desired, information associated with previous communications, such as bandwidth and/or communication count information for previous communications received during a predetermined time period, may also be used in an evaluation.

At block 430, a determination may be made as to whether the communication satisfies the traffic parameters and/or the traffic profile. For example, a determination may be made as to whether the communication is likely an expected communication to be received by the device 105. If it is determined at block 430 that the communication satisfies the traffic profile, then the communication may be approved and operations may continue at block 420 described above. If, however, it is determined at block 430 that the communication does not satisfy the traffic profile, then operations may continue at block 435.

At block 435, an alert message associated with the communication and/or the determination that the traffic profile has not been satisfied may be generated. A wide variety of information may be included in the alert message, such as an identifier of the device 105, information associated with the communication, information associated with one or more traffic parameters that were not satisfied, identifiers of an originating device for the communication, identifiers of one or more intermediate devices that may have altered a communication, location information for the device 105, and/or location information and/or timing information associated with the originating and/or intermediate devices. Once generated, the alert message may be output by the device for communication to one or more recipients, such as to the managing controller 120.

At block 440, the managing controller 120 may receive the alert message output by the device 105. At block 445, the managing controller 120 may analyze the alert message (and any alert messages received from other devices). At block 450, the managing controller 120 may identify any potential security threats and/or network intrusions based at least in part upon an analysis of the alert message. For example, the managing controller 120 may identify an originating device of the communication or a device that altered the communication as a potential security threat within the network. In certain embodiments, a security threat may be identified based upon the receipt of a plurality of alert messages. For example, multiple devices in communication with an originating device may generate respective alert messages that are processed to identify a security threat. A wide variety of methods and/or techniques may be utilized to facilitate the identification of a potential security threat or network intrusion.

In certain embodiments, one or more requests for location information associated with a device identified as a potential security threat may be output by the managing controller 120 for communication to one or more other devices, such as devices that generated alert messages. A device 105 may receive a request for location information, and location information may be communicated to the managing controller 120 in response to the request. Location information may be received by the managing controller 120 from any number of devices. As an alternative to requesting location information, location information may be included in one or more alert messages and identified by the managing controller 120. A wide variety of location information may be received by the managing controller 120, such as locations (e.g., global positioning coordinates, stored locations, street addresses, etc.) of one or more devices that triggered alerts, and/or timing information associated with communications between the devices and the device that poses a security threat.

As desired, a position or location of the device that is a potential security threat may be determined, calculated, or approximated by the managing controller 120. A wide variety of suitable techniques may be utilized to determine a device position. As one example, radio triangulation may be utilized to determine a position. For example, the positions of devices that triggered alerts may be utilized in conjunction with timing information, such as message response time between one or more of the devices and the device that is a potential security threat, in order to extrapolate an estimated position for the device. In this regard, the location of potential security risks within a network may be determined.

At block 455, any number of control actions may be determined and directed by the managing controller 120. A control action may be any suitable action intended to minimize or reduce the security risks with respect to an identified device that has been identified as posing an intrusion or security risk. For example, a control action may minimize the data that is potentially compromised by being communicated to the device. A wide variety of different control actions may be utilized as desired in various embodiments of the invention. For example, the managing controller 120 may direct one or more other devices to perform a deep packet inspection and/or evaluation of the information included in a suspicious communication. As another example, the managing controller 120 may direct other devices to not communicate messages to or process messages received from a device that poses a security threat. As yet another example, the managing controller 120 may reroute network traffic flow within a network. As illustrated in FIG. 4, at block 460, the managing controller 120 may communicate instructions (e.g., instructions for processing further communications) to one or more other devices. The instructions may be received and processed by a device 105 at block 465. As another example of a control action, the managing controller 120 may direct the dispatch of a technician to the determined location of the intruding device.

The method 400 may end following block 465.

FIG. 5 is a flow diagram of another example method 500 for analyzing network traffic to facilitate network intrusion detection, according to an illustrative embodiment of the invention. The method 500 may be utilized in association with one or more network-based systems, such as the system 200 illustrated in FIG. 2. In certain embodiments, the operations of the method 500 may be performed by at least one device, such as the device 205 illustrated in FIG. 2.

The method 500 may begin at block 505. At block 505, one or more communications channels, communications links, and/or network interfaces associated with the device 205 may be identified. For example, one or more networks that facilitate device communications may be identified, and one or more different types of communications links for the networks may be identified. As one example, if the device is a power substation device, one or more communications interfaces that facilitate communications with utility meters, AMI controllers, field automation devices, and/or other types of devices may be identified.

At block 510, one or more respective traffic profiles may be determined or generated for each of the communication links and/or interfaces. In certain embodiments, one or more established communications standards and/or communications protocols associated with device communications and/or the communications interface may be identified or determined. The standards and/or protocols may then be utilized to determine or generate traffic profiles and/or traffic parameters for the device 205. For example, a standard may be utilized to determine an expected communications flow for the device 205 via a communication link, such as expected numbers, sizes, and/or types of communications that will be received during a predetermined time period. As desired, a wide variety of other parameters and/or information may be utilized to generate a traffic profile. For example, information associated with the network (e.g., privacy settings, security settings, ownership information, etc.), a service provider (e.g., a utility provider, a medical provider, etc.), and/or information associated with other devices in communication with the device 105 may be utilized to generate a relatively accurate traffic profile. As another example, historical information associated with communications received by the device and/or associated devices may be evaluated and utilized to generate and/or modify a traffic profile. In this regard, a traffic profile may be tailored to various device settings and/or implementations.

A traffic profile may include a wide variety of information associated with expected network traffic for the device 205, such as one or more expected traffic parameters for the device. Examples of expected traffic parameters include, but are not limited to, a parameter associated with a number of communications received during a predetermined time period (e.g., an hour, a day, etc.), a parameter associated with an amount of data included in a communication, a parameter associated with an amount of data received during a predetermined time period, one or more parameters associated with time durations for an established communications session, one or more parameters associated with a time duration between communications sessions, parameters associated with a threshold number of errors that may normally be identified during a predetermined time period, and/or parameters associated with a time at which communications are received. At block 515, one or more communications received by the device 205 may be identified. For example, one or more communications received by the device 205 from other devices via any number of communications networks or communications links may be identified. At block 520, one or more traffic parameters for evaluating or analyzing the one or more communications may be identified or determined. For example, a communications link may be identified for each communication, and a traffic profile may be accessed and/or identified for the communications link. One or more traffic parameters associated with the traffic profile may then be identified as traffic parameters for evaluating the communication received via the identified communications link.

At block 525, the one or more communications may be respectively evaluated or analyzed utilizing the identified relevant traffic profile and/or traffic parameters. A wide variety of suitable methods and/or techniques may be utilized to evaluate a communication. For example, information associated with the communication (e.g., a bandwidth, communication timing, a communication count associated with the communication, etc.) may be compared to one or more traffic parameters, such as bandwidth, number of communications, and/or timing parameters. As desired, information associated with previous communications, such as bandwidth and/or communication count information for previous communications received during a predetermined time period, may also be used in an evaluation.

At block 530, a determination may be made as to whether the one or more communications satisfy the traffic parameters and/or the traffic profiles. For example, a determination may be made as to whether a communication is likely an expected communication to be received by the device 205. If it is determined at block 530 that the communications satisfy the relevant traffic profiles, then the communications may be approved and operations may continue at block 515 described above. If, however, it is determined at block 530 that one or more communications fail to satisfy relevant traffic profiles, then operations may continue at block 535.

At block 535, a control action may be directed by the device 205 based upon the identification of invalid content. In certain embodiments, a control action may include the generation of an alert message associated with the identified failure of one or more communications to satisfy a traffic profile. Once generated, the alert message may be output by the device 205 for communication to one or more recipients, such as a managing controller. As desired an alert message may be processed by a recipient in a similar manner as that described above with reference to the method 400 of FIG. 4.

In other embodiments, a control action may include the identification of a potential security threat or network intrusion and/or a device associated with the security threat (e.g., an originating device for a communication, etc.). The device 205 may then take any suitable action intended to minimize or reduce the security risks with respect to a device that has been identified as posing an intrusion or security risk. For example, the device 205 may take control actions to minimize the data that is potentially compromised by being communicated to the intruding device. A wide variety of different control actions may be utilized as desired in various embodiments of the invention. For example, the device 205 may initiate a deep packet inspection of data included in one or more suspicious communications. As another example, the device 205 may limit or suspend the processing of communications received from an intruding device. As another example, the device 205 may direct other devices to not communicate messages to or process messages received from an intruding device. As desired, the device 205 may communicate instructions (e.g., instructions for processing further communications) to one or more other devices. As yet another example of a control action, the device 205 may direct the dispatch of a technician to the determined location of the intruding device.

The method 500 may end following block 535.

The operations described and shown in the methods 400, 500 of FIGS. 4-5 may be carried out or performed in any suitable order as desired in various embodiments of the invention. Additionally, in certain embodiments, at least a portion of the operations may be carried out in parallel. Furthermore, in certain embodiments, less than or more than the operations described in FIGS. 4-5 may be performed.

The invention is described above with reference to block and flow diagrams of systems, methods, apparatus, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the spirit and scope of the appended claims.

This written description uses examples to disclose the invention, including the best mode, and also to enable any person skilled in the art to practice the invention, including making and using any devices or systems and performing any incorporated methods. The patentable scope of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method (500) comprising:
identifying at (515) least one communication received by a device (205);
determining (520) one or more network traffic parameters associated with a network traffic profile for a device (205);
evaluating (525), based at least in part upon the one or more network traffic parameters, the received at least one communication; and
determining (530), based at least in part upon the evaluation, whether the at least one communication satisfies the traffic profile.

2. The method of Claim 1, wherein determining (520) one or more network traffic parameters comprises determining one or more network traffic parameters associated with at least one of (i) a number of communications received in a predetermined time period, (ii) an amount of data associated with a communication, (iii) an amount of data received in a predetermined time period, (iv) a time duration associated with a communications session, (v) a time duration between received communication sessions, (vi) a number of errors identified during a predetermined time period, or (vii) a time at which communications are received.

3. The method of Claim 1 or 2, wherein determining (520) one or more network parameters associated with a traffic profile comprises determining one or more network parameters for a traffic profile associated with an established standard for communications associated with the communications interface.

4. The device of any of Claims 1 to 3, wherein determining (520) one or more network parameters associated with a traffic profile comprises determining one or more network parameters for a traffic profile associated with user preferences for the communications interface.

5. The method of any preceding Claim, wherein it is determined that the at least one communication does not satisfy the traffic profile, and further comprising:
directing a control action based at least in part upon the determination.

6. The method of Claim 5, wherein directing a control action comprises communicating (535) an alert message to a managing controller (225).

7. The method of Claim 6, further comprising:
receiving (465), from the managing controller (525), a message comprising instructions for processing additional communications; and
processing the received instructions.

8. The method of Claim 5 or 6, wherein directing a control action comprises at least one of (i) initiating a deep packet inspection of the content associated with the at least one communication, (ii) dispatching an operator to investigate one or more originating devices associated with the at least one communication, (iii) controlling operation of one or more external devices in communication with the device, (iv) directing the blocking of communications associated with an originating device for the at least one communication, or (v) redirecting communication traffic within a network associated with the device.

9. The method of any preceding Claim, further comprising:
receiving an alert message output by another device, wherein the alert message is generated based upon the analysis of one or more communications by the other device; and
analyzing the alert message to identify a security risk.

10. The method of any preceding Claim, wherein identifying a communications interface associated with at least one communication received by a device comprises identifying a communications interface associated with at least one communication received by one of (i) a substation control device, (ii) a substation automation device, (iii) a distribution automation device, (iv) a utility field force device, (v) an Advanced Metering Infrastructure device, (vi) an industrial control device, or (vii) a medical device.

11. A computer program comprising computer code means adapted to perform the steps of method of any of claims 1 to 10 when executed by a computer.

12. The computer program of claim 11 embodied on a computer-readable medium.

13. A device (205), comprising:
at least one memory (252) configured to store the computer program of claim 12 and
at least one processor (250) configured to access the at least one memory (252) and execute the computer program.
